# EUROPÄISCHE PATENTSCHRIFT

(11) **EP 3 196 986 B1**
(45) Veröffentlichungstag und Bekanntmachung des Hinweises auf die Patenterteilung: **21.03.2018**
(21) Anmeldenummer: 16305056.0
(22) Anmeldetag: 22.01.2016
(51) Int. Cl.: H01R 13/52, B60D 1/62, H01R 13/684, H01R 31/06

(54) **ELEKTRISCHES KUPPLUNGSTEIL**
ELECTRICAL COUPLING PART
ÉLEMENT DE COUPLAGE ELECTRIQUE

(43) Veröffentlichungstag der Anmeldung: 26.07.2017
(73) Patentinhaber: Nexans, 92400 Courbevoie (FR)
(72) Erfinder: VÖLKL, Franz, 92696 Flossenbuerg (DE); WALL, Markus, 92685 Floss (DE); RIEDEL, Richard, 92685 Floss (DE); HOFMANN, Michael, 92665 Grafenwoehr (DE)
(74) Vertreter: Lenne, Laurence

(56) Entgegenhaltungen:
- DE-U1-202008 012 786
- US-A1- 2010 227 505
- US-A1- 2012 064 739
- US-A1- 2014 038 463

## Beschreibung

Die Erfindung bezieht sich auf ein elektrisches Kupplungsteil entsprechend dem Oberbegriff des Patentanspruchs.

Ein derartiges Kupplungsteil geht beispielsweise aus der DE 20 2008 012 786 U1 hervor.

Ein solches Kupplungsteil dient beispielsweise und mit Vorteil dem elektrischen Anschluß von Anhängern von Lastkraftwagen an eine in denselben vorhandene Spannungsquelle. Zur Stromversorgung aller in bzw. an einem Anhänger vorhandenen Stromverbraucher werden in bekannter Technik elektrische Leitungen mit Leitern eingesetzt, die einen relativ großen Querschnitt haben, um eine störungsfreie Stromversorgung sicherzustellen. Der Aufwand an elektrisch leitendem Material, bei dem es sich in der Regel um Kupfer handelt, ist daher hoch.

Dieser Aufwand an auch teurem Leitermaterial kann dann vermindert werden, wenn die Leitungen des Anhängers durch eine elektrische Sicherung abgesichert werden, die bei zu hohem, beispielsweise durch einen Kurzschluß verursachten Strom die Stromzufuhr unterbrechen. Der elektrisch leitende Querschnitt von für die Verkabelung eines Anhängers eines Lastkraftwagens eingesetzten elektrischen Leitungen kann dann verkleinert werden. Auf dem Markt ist ein für eine solche Verkabelung vorgesehenes Kupplungsteil mit einer integrierten Sicherung erhältlich. Die Sicherung ist in einem Kontaktelement des Kupplungsteils enthalten, also in einem Steckerstift oder in einer Buchse. Wenn die Sicherung ausgelöst hat, muß sie nach Behebung des Fehlers, welcher zur Auslösung der Sicherung geführt hat, ersetzt werden. Dazu muß das Kupplungsteil geöffnet und wieder verschlossen werden. Das ist aufwendig und meist

nur von geschulten Personen durchführbar, denen geeignete Werkzeuge zur Verfügung stehen.

Aus der US 2010/0227505 A1 geht ein elektrisches Kupplungsteil für ein Elektrofahrzeug hervor, an das ein Ladestecker angeschlossen werden kann, um eine im Fahrzeug angeordnete Batterie aufzuladen. Das als Eingang für die Aufladung der Batterie bezeichnete Kupplungsteil hat eine Aufnahme, an der mehrere Sicherungen angeordnet sind, die herausnehmbar in Gehäusen untergebracht sind. Die Sicherungen sind mit ihren Enden an unterschiedliche Stifte des Kupplungsteils angeschlossen.

Die eingangs erwähnte DE 20 2008 012 786 U1 beschreibt einen Steckverbinder für eine mehrpolige elektrische Verbindung zwischen einem Fahrzeug und einem Anhänger. Er hat einen Gehäusekörper, der durch eine Anschlußkappe verschlossen ist. Durch die Anschlußkappe ist eine elektrische Leitung hindurchgeführt. Die Anschlußkappe hat außerdem eine Ausnehmung, in welcher in Gebrauchslage eine Sicherung angeordnet ist. Die Ausnehmung kann mittels einer Kappe verschlossen werden. Um die Ausnehmung ist ein Flansch mit einem nach außen vorstehenden Wulst angeordnet, auf den die Kappe abdichtend aufgesteckt werden kann.

Der Erfindung liegt die Aufgabe zugrunde, das eingangs geschilderte Kupplungsteil feuchtigkeitsdicht auszuführen und so zu gestalten, dass die Sicherung einfach montiert und einfach ausgetauscht werden kann.

Diese Aufgabe wird entsprechend den kennzeichnenden Merkmalen des Patentanspruchs gelöst.

Bei diesem Kupplungsteil bleibt der Vorteil erhalten, dass für die Verkabelung des Anhängers eines Lastkraftwagens - im Folgenden kurz als "LKW" bezeichnet - elektrische Leitungen mit Leitern eingesetzt werden können, deren elektrisch leitender Querschnitt klein gehalten werden kann. Wenn beispielweise durch einen Kurzschluß in der Verkabelung oder in einem an dieselbe angeschlossenen Stromverbraucher des Anhängers die Sicherung auslöst und damit die Stromzuführung unterbricht, kann der Schaden auf einfache Weise beispielsweise durch den Fahrer des LKWs selbst behoben werden. Er braucht nur das die Sicherung enthaltende Gehäuse durch Abnehmen der Kappe zu öffnen und die dann zugängliche Sicherung durch eine neue zu ersetzen - gegebenenfalls nach Behebung eines Fehlers. Danach wird die Kappe wieder aufgesetzt, so dass das Kupplungsteil zur Stromversorgung der Stromverbraucher des Anhängers des LKWs wieder einsatzbereit ist. Ein Werkzeug wird für diese Reparaturtätigkeit nicht benötigt.

Die Sicherung ist in Gebrauchslage in einem kleineren, separaten Gehäuse angebracht, das durch eine lösbar mit demselben verbundene Kappe verschlossen werden kann und das im fertigen Kupplungsteil mit seinem der Kappe abgewandten Ende in einen Dichtkörper eingebettet ist, der um das leitungsseitige Ende des Kontaktträgers herumgespritzt ist und der sich bis über die Leitung erstreckt.

Ausführungsbeispiele des Erfindungsgegenstandes sind in den Zeichnungen dargestellt.

Es zeigen:
Fig. 1 in rein schematischer Darstellung einen LKW mit Anhänger.
Fig. 2 eine Einzelheit aus Fig. 1 in vergrößerter Darstellung.
Fig. 3 ein Kupplungsteil in einem Stadium der Vorfertigung.
Fig. 4 eine gegenüber Fig. 3 ergänzte Ausführung des Kupplungsteils nach der Erfindung ebenfalls im Stadium der Vorfertigung.
Fig. 5 ein fertiges Kupplungsteil nach der Erfindung.

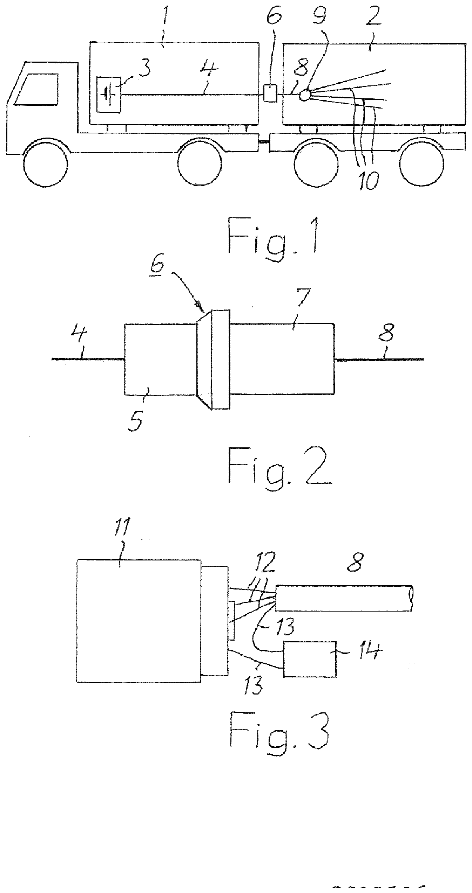

In Fig. 1 sind ein LKW 1 und ein mit demselben verbundener Anhänger 2 schematisch dargestellt. Im LKW 1 ist eine Spannungsquelle 3 angeordnet, beispielsweise eine Batterie. An die Spannungsquelle 3 ist eine elektrische Leitung 4 angeschlossen, die mit einem ersten Teil 5 einer elektrischen Kupplung 6 abgeschlossen ist. In Arbeitsstellung ist mit dem ersten Teil 5 der Kupplung 6 ein komplementäres Teil 7 elektrisch leitend verbunden, das im Folgenden als "Kupplungsteil 7" bezeichnet ist. Die komplette Kupplung 6 geht schematisch aus Fig. 2 hervor. An das in den Fig. 3 bis 8 dargestellte Kupplungsteil 7 ist eine elektrische Leitung 8 angeschlossen, welche in den Anhänger 2 hineingeführt und in demselben beispielsweise bis zu einem Verteiler 9 verlegt ist. Von dem Verteiler 9 führen mehrere elektrische Leitungen zu den im oder am Anhänger 2 angebrachten elektrischen Verbrauchern. Die Leitungen sind durch Linien 10 angedeutet. Sie bilden insgesamt die Kabelanordnung des Anhängers 2.

Das Kupplungsteil 7 hat gemäß Fig. 3 einen aus mechanisch stabilem Isoliermaterial bestehenden Kontaktträger 11, in dem mehrere, gegeneinander isolierte elektrische Kontaktelemente angeordnet sind. Der Kontaktträger 11 hat mit Vorteil einen kreisrunden Querschnitt. Die Kontaktelemente sind grundsätzlich bekannt und daher nicht mit dargestellt. Sie können als Stifte oder als Buchsen ausgeführt sein. An die Kontaktelemente sind Adern 12 und 13 der elektrischen Leitung 8 angeschlossen. Sie bestehen aus elektrischen Leitern, die von einer Isolierung umgeben sind.

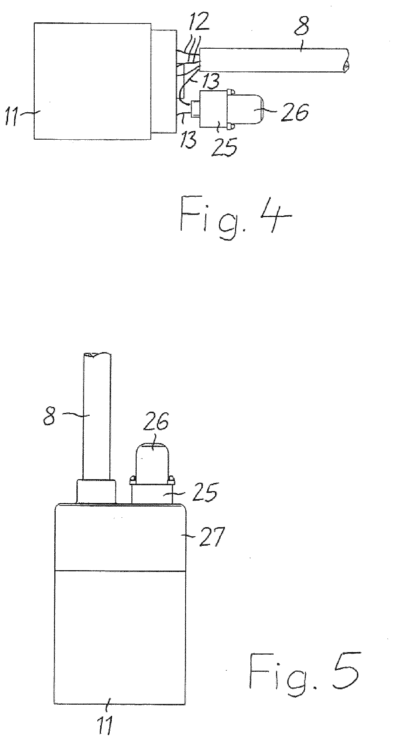

In der Ader 13 der Leitung 8 ist ein elektrisches Kontaktteil 14 angeschlossen, das die Ader 13 unterbricht und zur Aufnahme einer nicht mit dargestellten elektrischen Sicherung dient. Bei in Arbeitsposition befindlicher Sicherung ist der Strompfad der Ader 13 über die Sicherung geschlossen. Das Kontaktteil 14 ist in einem aus Fig. 4 ersichtlichen Gehäuse 25 angeordnet, das aus einem mechanisch stabilen Kunststoff besteht. Das Gehäuse 25 hat eine Öffnung, in welche die elektrische Sicherung eingesetzt werden kann. Die Sicherung ragt etwas aus der Öffnung heraus, so dass sie gegebenenfalls auf einfache Art und Weise herausgezogen und durch eine neue ersetzt werden kann. Die Öffnung ist bei fertiggestelltem Kupplungsteil 7 durch eine Kappe 26 verschlossen, welche mittels einrastender Elemente lösbar mit dem Gehäuse 25 verbunden ist.

Zur Fertigstellung des Kupplungsteils 7 nach Fig. 5 wird beispielsweise wie folgt vorgegangen:
Die Adern 12 und 13 der Leitung 8 werden durch Entfernen eines dieselben umgebenden Mantels auf einer vorgegebenen Länge freigelegt. In die Ader 13 wird das Kontaktteil 14 eingeschaltet, durch welches die Ader 13 zunächst unterbrochen ist. Alle Adern 12 und 13 werden mit den Kontaktelementen des Kontaktträgers 11 elektrisch leitend verbunden. Das Kontaktteil 14 wird im Gehäuse 25 positionsgerecht befestigt. Der Kontaktträger 11, das Gehäuse 25 und die Leitung 8 werden dann in ein Spritzwerkzeug eingelegt, in welchem ein Dichtkörper 27 um diese Teile herumgespritzt wird.

Das Kupplungsteil 7 nach Fig. 5 ist damit fertiggestellt. Für einen gegebenenfalls erforderlichen Austausch der Sicherung braucht nur die Kappe 26 vom Gehäuse 25 abgenommen und nach erfolgtem Austausch wieder auf dasselbe aufgesetzt zu werden.

## Patentansprüche

1. Elektrisches Kupplungsteil mit einem Kontaktträger aus einem mechanisch stabilen Isoliermaterial, in dem gegeneinander isolierte, elektrische Kontaktelemente angeordnet sind, an welche in Montageposition elektrische Leiter einer elektrischen Leitung angeschlossen sind, bei welchem der Kontaktträger (11) an seinem der Leitung zugewandten Ende feuchtigkeitsdicht abgedeckt ist und bei welchem in einen der Leiter der Leitung (8) ein elektrisches Kontaktteil (14) zum elektrisch leitenden Anschließen einer elektrischen Sicherung (15) eingeschaltet ist, die in eine Öffnung des Kupplungsteils eingesteckt und durch eine Kappe (26) abgedeckt ist, **dadurch gekennzeichnet,**
- **dass** das Kontaktteil (14) in einem separaten Gehäuse (25) aus einem mechanisch stabilen Kunststoff angeordnet ist,
- **dass** das Gehäuse (25) an seiner dem Kontaktträger (11) in Gebrauchslage abgewandten Stirnseite eine Öffnung zum Einstecken und zum Herausnehmen der Sicherung (15) aufweist, die in Gebrauchslage durch eine mittels einrastender Elemente lösbar mit dem Gehäuse (25) verbundene Kappe (26) verschlossen ist, und
- **dass** das Gehäuse (25) mit seinem der Kappe (26) abgewandten Ende in einen Dichtkörper (27) eingebettet ist, der einerseits den Kontaktträger (11) feuchtigkeitsdicht abdeckt und andererseits die Leitung (8) umschließt.

## Claims

1. An electrical coupling part with a contact carrier made of a mechanically stable insulation material, in which electrical contact elements, insulated from each other, are arranged, to which in the installation position electrical conductors of an electrical line are connected, in which the contact carrier (11) is covered in a moisture-tight manner on its end facing the line and in which in one of the conductors of the line (8) an electrical contact part (14) for the electrically conductive connection of an electrical fuse (15) is turned on, which is inserted into an opening of the coupling part and is covered by a cap (26), **characterized in**
- **that** the contact part (14) is arranged in a separate housing (25) made of a mechanically stable plastic,
- **that** the housing (25) has on its end face facing away from the contact carrier (11) in the use position an opening for the insertion and for the removal of the fuse (15), which in the use position is sealed by a cap (26) connected detachably with the housing (25) by means of latching elements, and
- **that** the housing (25) is embedded with its end facing away from the cap (26) in a sealing body (27), which, on the one hand, covers the contact carrier (11) in a moisture-tight manner and, on the other hand, encloses the line (8).

## Revendications

1. Pièce de couplage avec un support de contact constitué d'un matériau isolant résistant mécaniquement, dans laquelle sont disposés des éléments de contact électriques isolés les uns par rapport aux autres, auxquels sont raccordés, dans la position de montage, des conducteurs électriques d'un câble électrique, dans laquelle le support de contact (11) est recouvert de manière étanche à l'humidité, au niveau de son extrémité orientée vers le câble et dans laquelle, dans un des conducteurs du câble (8), est insérée une pièce de contact électrique (14) pour le raccordement électro-conducteur d'un fusible électrique (15), qui est enfichée dans une ouverture de la pièce de couplage et recouverte d'un capuchon (26), **caractérisée en ce que**
- la pièce de couplage (14) est disposée dans un boîtier séparé (25) constitué d'une matière plastique mécaniquement résistante,
- le boîtier (25) comprend, au niveau de sa face frontale opposée, dans la position d'utilisation, au support de contact (11), une ouverture pour l'insertion et pour le retrait du fusible (15), qui est obturée, dans la position d'utilisation, par un capuchon (26) relié de manière amovible au moyen d'éléments d'encliquetage avec le boîtier (25) et
- le boîtier (25) est intégré avec son extrémité opposée au capuchon (26) dans un corps d'étanchéité (27) qui recouvre de manière étanche à l'humidité d'une part le support de contact (11) et d'autre part le câble (8).
